# EUROPEAN PATENT SPECIFICATION

(11) **EP 0 568 080 B1**
(45) Date of publication and mention of the grant of the patent: **23.12.1998**
(21) Application number: 93107004.9
(22) Date of filing: 29.04.1993
(51) Int. Cl.: H04N 1/00

(54) **Image scanning apparatus**
Bildabtastgerät
Appareil de balayage d'image

(30) Priority: 30.04.1992 JP 111188/92; 19.05.1992 JP 125941/92; 19.05.1992 JP 125944/92
(43) Date of publication of application: 03.11.1993
(73) Proprietor: MATSUSHITA ELECTRIC INDUSTRIAL CO., LTD., Kadoma-shi, Osaka-fu, 571 (JP)
(72) Inventor: Shin, Keizou, Kasuga-shi, Fukuoka-ken (JP); Nishijima, Koji, Dazaifu-shi, Fukuoka-ken (JP); Ichimaru, Katsuzi, Higashi Matsuura-gun, Sega-ken (JP); Uno, Yuuji, Minami-ku, Fukuoka (JP); Mutou, Junichi, Chikushi-gun, Fukuoka-ken (JP)
(74) Representative: Manitz, Finsterwald & Partner

(56) References cited:
- EP-A- 0 196 914
- EP-A- 0 364 827
- US-A- 5 025 326
- PATENT ABSTRACTS OF JAPAN vol. 6, no. 259 (E-149)(1137) 17 December 1982 & JP-A-57 154 967 ( FUJI XEROX ) 24 September 1982

## Description

### BACKGROUND OF THE INVENTION

### 1. Field of the Invention:

The present invention relates to an image scanning apparatus used as an input device for a desktop publishing system (hereinafter referred to as "DTP") or an electronic filing system (hereinafter referred to as "electronic file").

### 2. Description of the Prior Art:

In recent years, with the spread of an image data processing equipment such as a DTP or an electronic file, intense interest has been shown towards an image scanning apparatus which is used as an input device for such image data processing equipment.

Following this, the number of offices in which the image scanning apparatus is used is increasing. Now, a care must be taken to secure a space in the office for installation of the image scanning apparatus.

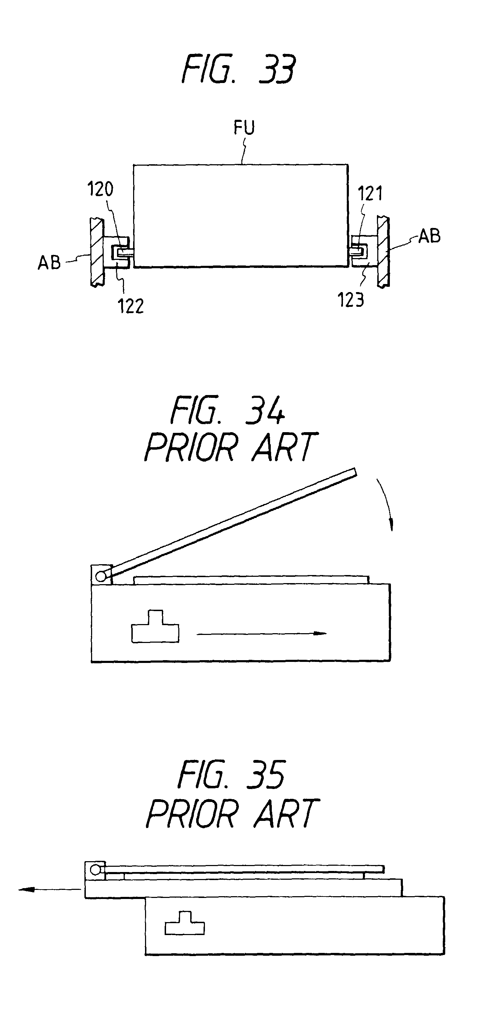

There have been used two types of image scanning apparatus: One is the so-called moving optical unit exposure type wherein as shown In FIG. 34, an optical scanning unit is moved relative to a fixed original to read an image on the original; and the other is the so-called moving original exposure type wherein as shown in FIG. 35, an original is moved relative to a fixed optical scanning unit to enable the latter to read an image on the original.

As clearly understood from FIGS. 34 and 35, both of the conventional image scanning apparatus require a space for installation which is at least equal to the size of an original to be scanned. In addition, a sufficient space must be provided around the conventional apparatus so as to enable the operator to set the original before starting the operation of the apparatus. Thus, the conventional image scanning apparatus have a drawback that a relatively large space must be provided for installation of the apparatus.

This drawback will be enhanced if the image scanning apparatus is disposed within a single body case in combination with a printer apparatus.

From EP-A-0 364 827 an image processing apparatus is known which includes a paper discharge portion and a paper supply portion which are formed on one side of the housing of the image processing apparatus and arranged in vertically spaced relation to one another. The subject document is transported along a U-shaped feed path through the image processing apparatus by feed means which comprise first feed means for feeding a subject document from said paper supply portion to scanning means inside the housing of the image processing apparatus and second feed means for feeding the subject document from said scanning means to said paper discharge portion.

The subject documents are fed one after another by the first and second feed means through the image processing apparatus whereby a following subject document is taken out from the paper supply portion only when the scanning of the preceding subject document has been finished.

From JP-A-5714967 an automatic original supply device with an original setting tray and an original discharging tray is known wherein the space between the setting tray and the discharging tray is minimized. To realize this minimization the feed path along which the subject documents are fed is of a U-form shape whereby the original setting tray and the original discharging tray are positioned very close to each other.

### SUMMARY OF THE INVENTION

It is an object of the present invention to provide an image scanning apparatus incorporating structural features which enable a high-speed scanning operation.

This object is solved according to the invention by an image scanning apparatus according to claim 1.

The image scanning apparatus according to the invention may further include a body case in the form of a substantially rectangular hollow box, wherein the paper discharge portion and the paper supply portion are formed in one side of the hollow box and arranged in vertically spaced relation to one another, the scanning means mounted within the hollow box, and a conveyor unit disposed within the hollow box comprising the first and second feed means for feeding a subject document along a feed path. The feed path is defined by the conveyor unit and has a substantially horizontal U-shape. The horizontal U-shaped guide path extends that the subject document, as it is fed by the conveyor unit, is transferred from the paper supply portion to the paper discharge portion via the scanning unit.

The image scanning unit having the horizontal U-shaped feed path is compact in size and hence requires only a small space for installation.

Further the first feed means are arranged to supply the subject document from the paper supply portion into the horizontal U-shaped feed path, the second feed means are arranged for receiving the subject document from the first feed means and further advancing the subject document through the scanning unit, and a discharge means is arranged for discharging the subject document to the paper discharge portion after the subject document is scanned by the scanning unit. The first feed means comprises a single feed unit and is detachably mounted on the hollow box.

In a further embodiment an image scanning apparatus comprises a body case composed of a substantially rectangular hollow box having a side; the paper discharge portion and the paper supply portion which are formed in said side of the hollow box and arranged in vertically spaced relation to one another; the scanning unit mounted within the hollow box; and the conveyor means disposed within the hollow box for feeding a subject document along a feed path so as to convey the subject document from the paper supply portion to the paper discharge portion via the scanning unit, the feed path extending around the scanning unit.

An image scanning apparatus according to the invention may further comprise a body case composed of a substantially rectangular hollow box having a side; the paper supply portion and the paper discharge portion which are formed in said side of the hollow box; the scanning unit mounted within the hollow box and located substantially at a central portion of the hollow box; the first feed means disposed within the hollow box for feeding a subject document from the paper supply portion to the scanning unit; and the second feed means disposed within the hollow box and located downstream of the first feed means for feeding the subject document from the scanning unit to the paper discharge portion.

The above and other objects, features and advantages of the present invention will become more apparent from the following description when making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a perspective view of an information processing system including an image scanning apparatus according to an embodiment of the present invention;
FIG. 2 is an operational block diagram of a scanner/printer apparatus using the image scanning apparatus;
FIG. 3 is a vertical cross-sectional view of the scanner/printer apparatus with parts shown on enlarged scale;
FIG. 4 is an enlarged vertical cross-sectional view of a printer section of the scanner/printer apparatus, the view showing the manner in which a cover of the printer section is opened and closed;
FIGS. 5 through 10 are schematic vertical cross-sectional views showing the operation of the printer section of the scanner/printer apparatus;
FIG. 11 is a diagrammatical perspective view showing a drive system of a scanner section of the scanner/printer apparatus;
FIG. 12 is a schematic front elevational view of the drive system of the scanner section;
FIG. 13 is an enlarged cross-sectional view illustrative of the operation of retard rollers and separation rollers of the scanner/printer apparatus;
FIGS. 14 through 26 are diagrammatical views illustrative of the operation of the scanner section;
FIGS. 27 through 30 are flowcharts showing the operation of the scanner section of the scanner/printer apparatus;
FIG. 31 is a vertical cross-sectional view of the scanner/printer apparatus shown with a rear cover open and with a paper feed unit almost drawn out from a body of the apparatus;
FIG. 32 is a perspective view showing a retard roller attachment plate of the scanner/printer apparatus;
FIG. 33 is a schematic front elevational view of a paper feed portion of the scanner/printer apparatus;
FIG. 34 is a diagrammatical view showing the general construction of a conventional image scanning apparatus; and
FIG. 35 is a diagrammatical view showing the general construction of another conventional image scanning apparatus.

### DETAILED DESCRIPTION OF THE INVENTION

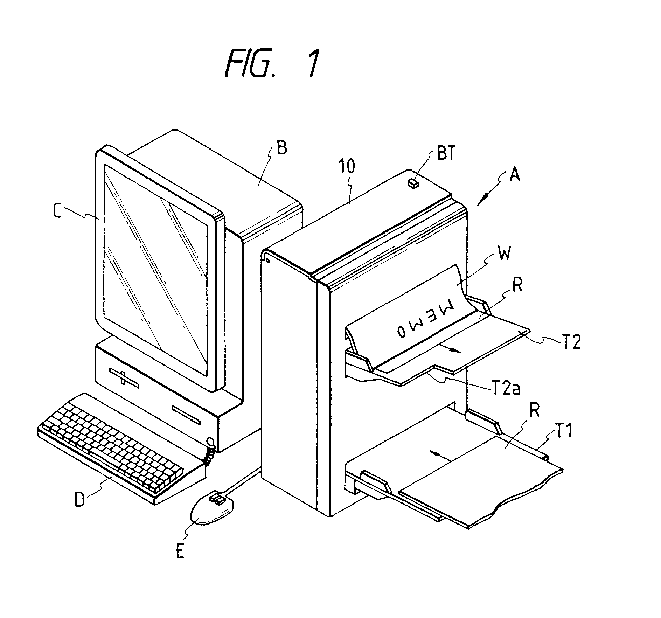

FIG. 1 shows an information processing system or equipment which comprises a scanner/printer apparatus A, a main frame B of the information processing system, a display device C such as a liquid crystal display, a keyboard D, and a mouse E. The scanner/printer apparatus A includes an image scanning apparatus according to the present invention.

In FIG. 1, reference character R denotes a subject document (scanned object), T1 denotes a subject document supply tray, and T2 denotes a subject document discharge tray. The subject document discharge tray T2 may also be used for receiving a printed recording sheet W. A front corner of the subject document discharge tray T2 is cutout or removed so as to form an elongated cutout recess T2a. The cutout recess T2a thus formed enables the user to take up the subject document R or the recording sheet W with utmost ease.

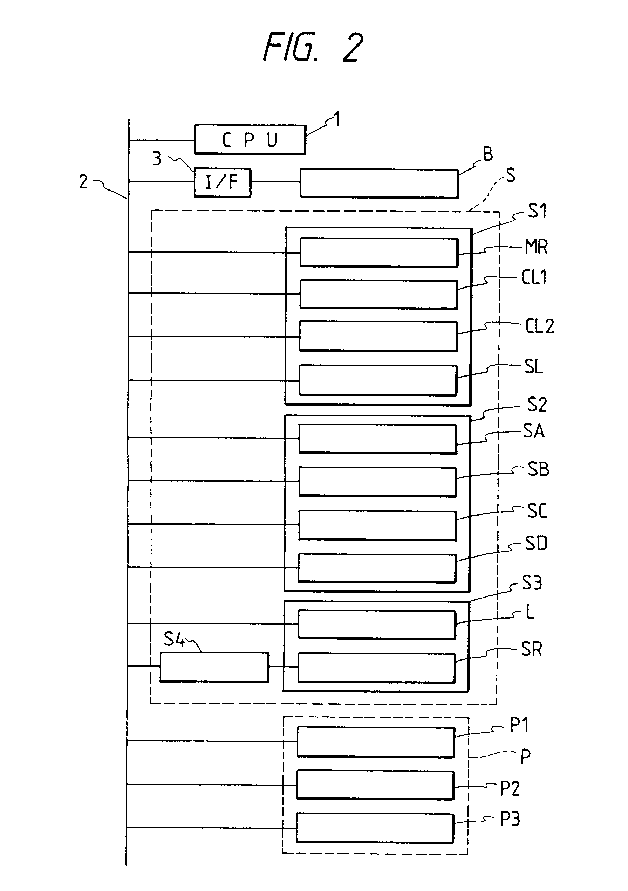

In FIG. 2 reference character 1 denotes a central processing unit (CPU) incorporated in the scanner/printer apparatus A. The CPU 1 is connected to the main frame B of the information processing system via a bus 2 and an interface (I/F) 3. The CPU 1 controls the operation of a scanner section S and a printer section P in accordance with instructions received from the main frame B of the information processing system.

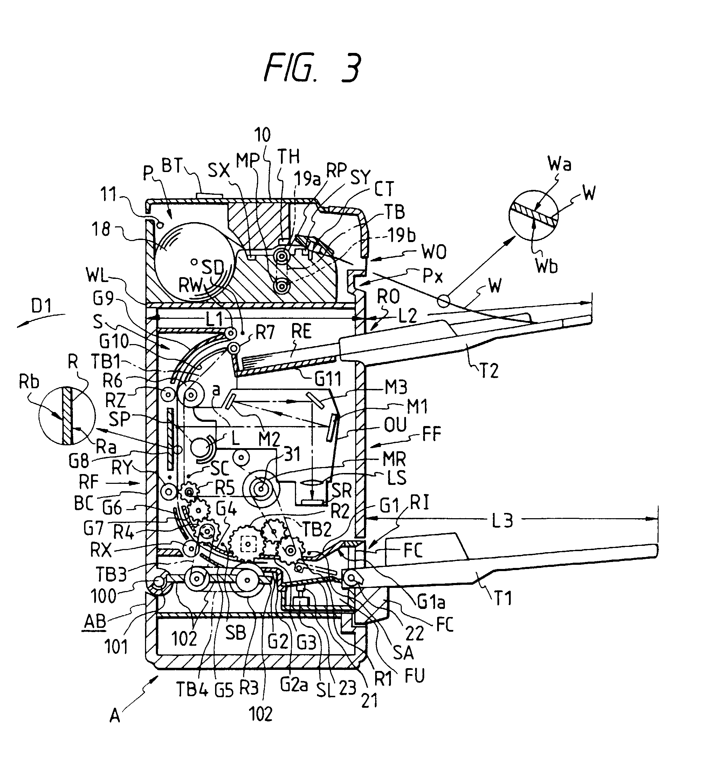

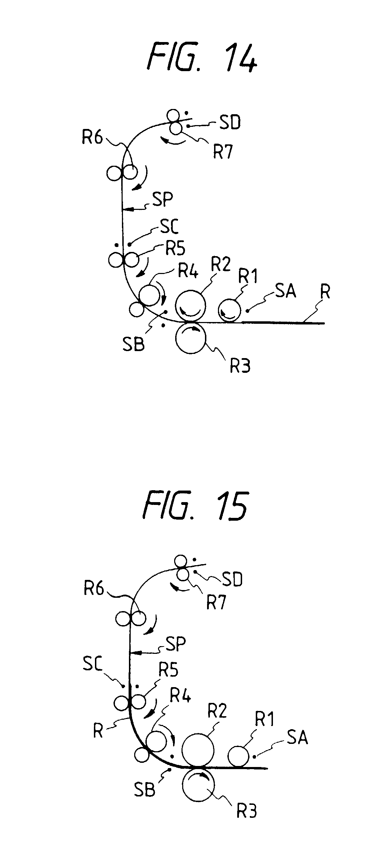

As shown in FIG. 2 (and as also shown in FIGS. 3 and 14), the scanner section S includes a drive system or mechanism S1, a subject document sensor unit S2, a scanning unit (reading unit) S3, and an image processing unit S4. The drive system S1 includes a motor MR, a first electromagnetic clutch CL1, a second electromagnetic clutch CL2 and a solenoid SL. The subject document sensor unit S2 includes a subject document presence sensor SA, a subject document trailing end sensor SB, a subject document leading end sensor SC and a subject document discharge sensor SD. The scanning unit S3 includes a light source L and a scanning sensor SR. The image processing unit S4 generates image information about the subject document R based on information read out or scanned by the scanning sensor SR.

The subject document presence sensor SA of the subject document sensor unit S2 is of the contact type wherein the output of the sensor is turned on when the sensor detects an object. Other sensors SB, SC, SD are of the non-contact, transmission type wherein the output of the sensor is turned off when the sensor detects an object.

The printer section P is composed of a data output unit P1, a drive system P2 and a recording sheet sensor unit P3. The data output unit P1 includes a thermal head TH. The drive system P2 includes a platen RP, a drive motor MP for rotating the platen RP, and a cutter CT. The recording sheet sensor unit P3 includes a recording sheet presence sensor SX and a recording sheet trailing end sensor SY.

Each of the above-mentioned components of the scanner section S and the printer section P operates under the control of the instructions supplied from the CPU 1. Structural details of the individual components will be described below.

Referring now to FIG. 3, there is shown the general construction of the scanner/printer apparatus A.

Reference character AB denotes a body case in the form of a substantially rectangular hollow box. The box AB includes a horizontal partition wall WL provided at a level which is nearly equal to three fourth of the overall height of the box AB. By the partition wall WL thus provided, an internal space of the box AB is separated into an upper chamber and a lower chamber. The printer section P is disposed in the upper chamber and the scanner section S is disposed in the lower chamber. More specifically, the body case of the scanner/printer apparatus A is composed of an upstanding, vertically elongated rectangular hollow box AB, and the printer section P and the scanner section S are disposed in vertical juxtaposition within the box AB. The scanner/printer apparatus A thus constructed is extremely compact because the overall bottom area of the scanner/printer apparatus A is only several tens percent of the sum of a bottom area of a single conventional scanner apparatus and a bottom are of a single conventional printer apparatus.

In FIG. 3, reference character WO denotes a paper discharge portion of the printer section P, RI denotes a paper supply portion of the scanner section S for supplying the subject document R, and RO denotes a paper discharge portion of the scanner section S for discharging the subject document R. The paper discharge portion WO, the paper supply portion RI and the paper discharge portion RO are all provided in a front side FF (the right side in FIG. 3) of the box AB and arranged in vertical alignment with one another. This arrangement frees the user from paying attention to a back or rear side RF (the left side in FIG. 3) of the box AB. Accordingly, the scanner/printer apparatus A can he installed with its back side RF located close to a dead space, such as a wall (not shown) of the installation site. The necessary installation space can, therefore, be reduced further.

Reference character Px shown in FIG. 3 denotes a horizontal recess or groove formed (in the front side FF of the box AB) at a position immediately below the paper discharge portion WO. An exclusive tray (not shown) which is used exclusively for receiving the printed recording sheet is detachably attached to the recess Px. However, according to the scanner/printer apparatus A of this invention, the paper discharge tray T2 provided for receiving the subject document R is also able to receive the printed recording sheet W which is discharged from the paper discharge portion WO. Accordingly, the exclusive tray may be omitted.

Then, the printer section P will be described below in conjunction of the structure of the box AB of the scanner/printer apparatus A.

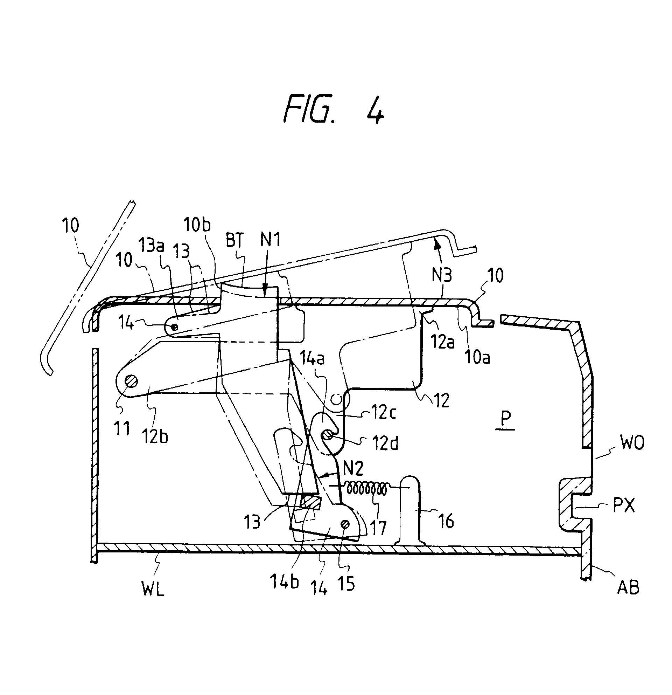

As shown in FIG. 4, the box AB includes a cover 10 for opening and closing an upper portion of the printer section S. When the cover 10 is opened upwardly it assumes a fully opened position indicated by the two-dot and dash lines. With the cover 10 held in the fully opened position, a recording sheet roll 18 (FIG. 3) can readily be replaced from an upper side of the printer section S.

A pivot plate 12 has an upper portion 12a fixed to the under surface of the cover 10, and a left end portion 12b pivotally connected by a horizontal shaft 11 to the box AB. The pivot plate 12 further includes a downwardly projecting lower portion 12c having a horizontal projection 12d. Designated by 13 is an actuating plate 13 which is pivoted at its left end portion 13a to the box AB by means of a horizontal shaft 14. An upper end portion of the actuating plate 13 projects upwardly from an oblong hole 10b which is formed in the cover 10. The upper end portion of the actuating plate 13 constitutes a press button BT. A lower portion of the actuating plate 13 projects downwards and terminates at a flat lower end surface 13b. The lower end surface 13a is held in contact with a lateral projection 14b on a locking plate 14. The locking plate 14 is pivotally connected by a shaft 15 to the box AB and has an hook-shaped upper end portion 14a. The hook-shaped upper end portion 14a is releasably engageable with the horizontal projection 12d to latch the pivot plate 12a.

Designated by 17 is a tension coil spring 17 which is connected at its left end to the locking plate 14. The right end of the spring 17 is connected to a support rod 16 fixed to the partition wall WL. The spring 17 normally urges the locking plate 14 to turn clockwise about the shaft 15 so as to enable the hook-shaped upper end portion 14a to latch the projection 12d of the pivot plate 12, thereby holding the cover 10 in a closed position (indicated by the solid lines) in which the printer section P is closed by the cover 10.

The cover 10 is normally disposed in the solid-lined closed position shown in FIG. 4. When the press button BT is depressed in the direction of the arrow N1, the actuating plate 13 pivots about the shaft 14 until it assumes its phantom-lined position. With this angular movement of the actuating plate 13, the lower end surface 13b of the actuating plate 13 forces the lateral projection 14b of the locking plate 14 in a downward direction, thereby turning the locking plate 14 about the shaft 15 in the direction of the arrow N2 against the force of the spring 17. With this angular movement of the locking plate 14, the hook-shaped upper end portion 14a of the locking plate 14 is disengaged from the horizontal projection 12d of the pivot plate 12, as indicated by the phantom lines in FIG. 4. Immediately thereafter, the locking plate 14 returns from the phantom-lined releasing position to the solid-lined locking position under the force of the spring 17. During this return stroke, the hook-shaped upper end portion 14a of the locking plate 14 continuously urges the lower portion 12c of the pivot plate 12 upwardly whereby the pivot plate 12 and the cover 10 fixed to the pivot plate 12 are forced to turn about the shaft 11 in the direction of the arrow N3. The cover 10 is displaced to a slightly opened position, as indicated by the dot-and-dash lines in FIG. 4. Subsequently, the cover 10 is fully opened by the user until it assumes a fully opened position indicated by the two-dot-and dash lines in the same figure. While the cover 10 is disposed in the fully opened position, the user is able to carry out the necessary maintenance works, such as replacement of a recording sheet roll 18 (FIG. 3), which can be achieved from the upper side of the printer section P. The printer section P having such an openable upper portion is easy to maintain.

A description given below is related to an internal construction of the printer section P.

In FIG. 3, reference character 18 denotes a sheet roll 18 which is composed of a rolled recording sheet W of heat-sensitive paper. The sheet roll 18 is replaceably and rotatably disposed in a recessed portion formed adjacent to the rear side RF of the printer section P. As illustrated on enlarged scale in FIG. 3, the recording sheet W which is unreeled from the sheet roll 18 has an obverse side or surface Wa adapted to be printed, and a reverse side or surface Wb bearing a paper end mark (not shown) at a trailing end of the recording sheet W. The platen RP is rotatably mounted in a central portion of the printer section S in tangential relation to the reverse side Wb of the recording sheet W. The platen RP is driven by a reversible motor MP via a power transmission mechanism. The power transmission mechanism is composed of a drive pulley 19a attached to a drive shaft of the reversible motor MP, a driven pulley 19b attached to a shaft of the platen RP, and an endless belt TB running around the pulleys 19a and 19b.

With this construction, when the reversible motor MP is driven in the forward direction, the recording sheet W is fed forwardly (in the right-hand direction in FIG. 3). Conversely, when the reversible motor MP is driven in the reverse direction, the recording sheet W is fed backwards (in the left-hand direction in FIG. 3).

The cutter CT is disposed between the platen RP and the paper discharge portion WO. The cutter CT is composed of a cooperating pair of cutter blades disposed on opposite sides of the recording sheet W and relatively movable toward each other to sever the recording sheet W. The recording sheet presence sensor SX is disposed between the sheet roll 18 and the platen RP for detecting the presence and absence of the recording sheet W. The recording sheet trailing end sensor SY is disposed between the platen RP and the cutter CT for detecting the paper end mark provided on the reverse side Wb of the recording sheet W.

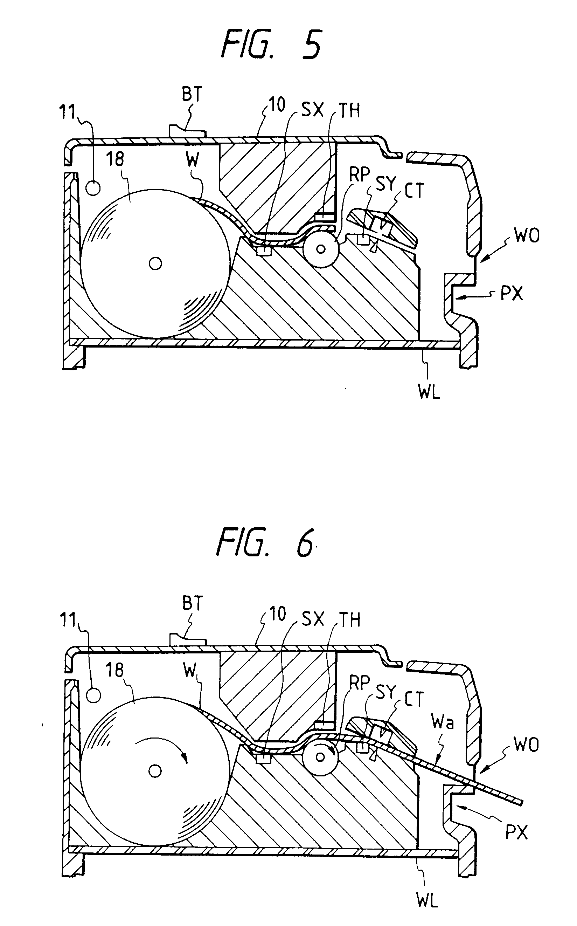

The operation of the internal components of the printer section P will be described below with reference to FIGS. 5 through 10.

The components of the printer section P shown in FIG. 5 are kept in the standby state in which an unprinted recording sheet W is stopped with its leading edge nipped between the thermal head TH and the platen RP.

Then, a print command or instruction is issued from the CPU 1 (FIG. 2) whereupon the reversible motor MP (FIG. 3) is driven in the forward direction to rotate the platen RP in the forward direction as indicated by the arrow shown in FIG. 6. Thus, the recording sheet W is unwound from the sheet roll 18. Simultaneously with the forward rotation of the platen RP, the thermal head TH produces printed information on the obverse side Wa of the recording sheet W.

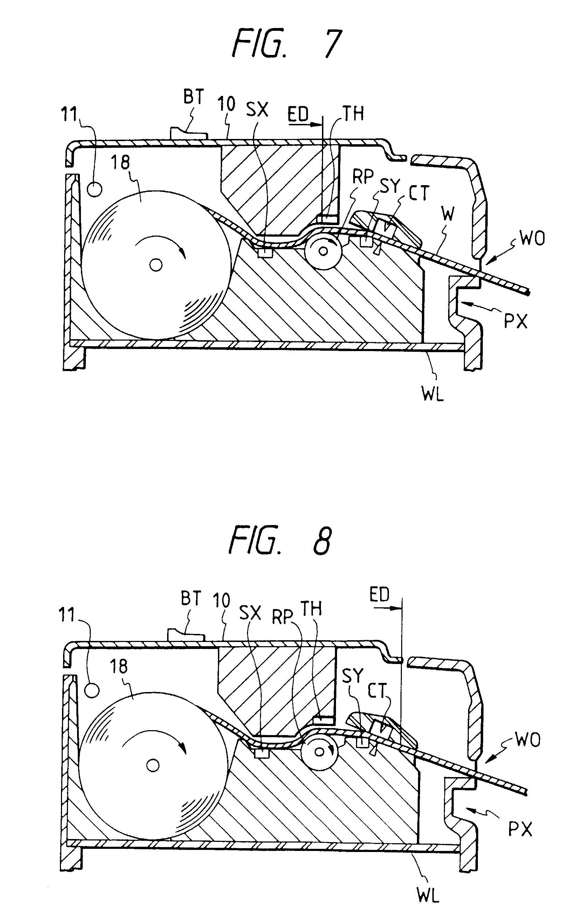

When the printing operation is completed, the thermal head TH is de-activated. Thus, the thermal head TH does not print a portion of the recording sheet W which extends downstream of a print end position ED (FIG. 7) on the obverse side Wa of the recording sheet W. On the other hand, the forward rotation of the platen RP is continued for a while so that the recording sheet W is further unwound from the sheet roll 18, as shown in FIG. 8.

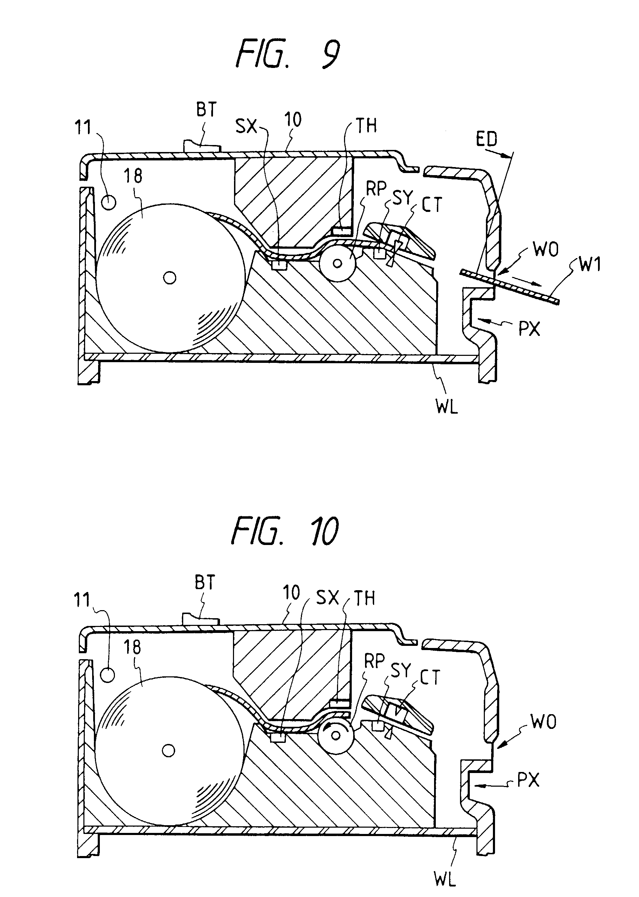

As a result of continuous rotation of the platen RP, the print end position ED passes through the cutter CT and comes to the side adjacent to the paper discharge portion WO. At this time, the CPU 1 issues a stop command or instruction to stop the reversible motor MP. Thus, the rotation of the platen RP is stopped. Substantially at the same time, the cutter CT is driven, as shown in FIG. 9, so as to cut or sever the recording sheet W at a position which is spaced a distance from the print end position ED in the upstream direction (toward the sheet roll 18) as viewed from the direction of feed of the recording sheet W. The printed recording sheet W is discharged from the paper discharge portion WO and then received on the subject document tray T2 (FIG. 3) attached to the paper discharge portion WO. In the illustrated embodiment, a portion of a paper feed path which is located adjacent to the cutter CT is sloped down toward the paper discharge portion WO. Accordingly, a printed length of the recording sheet W which is severed by the cutter CT is guided along the downwardly sloped feed path portion and smoothly discharged onto the subject document tray T2. Since the subject document tray T2 serves also as a tray for receiving the printed recording sheet W, a separate exclusive tray (not shown) which is provided for exclusive use with the printed recording sheet W may be omitted. With this omission of the exclusive tray, the overall size of the scanner/printer apparatus (in the transverse direction of FIG. 3) can be reduced.

When the recording sheet W is cut or severed, the CPU 1 sends a reverse rotation command or instruction to the reversible motor MP. As a result, the platen RP is rotated in the reverse direction as indicated by the arrow in FIG. 10 so that an unwound portion of the recording sheet W is fed backward toward the sheet roll 18 until the leading edge assumes the standby position shown in FIG. 5. Thus, subsequent to the end of the cutting operation, the leading edge of the recording sheet W is returned to the working position of the thermal head TH. This arrangement eliminate waste of the recording sheet W which would otherwise be produced when the recoding sheet W is present in a region extending between the cutter CT and the thermal head TH.

The construction of the scanner section S will be described below with reference to FIGS. 3 and 11 through 13.

Reference characters G1, G2, G3, G4, G7, G8, G9 and G10 denote a group of guides which jointly form a feed path along which the subject document R is fed. The feed path has a generally horizontal U shape. Reference characters R1, R2, R3, R4, R5, R6 and R7 denote feed roller groups which are disposed along the horizontal U-shaped feed path for feeding the subject document R along the feed path in such a condition that the front side Ra of the subject document R (which is to be read or scanned by an optical unit OU) is held in friction contact with the feed rollers R1-R7. Similarly, reference characters RX, RY, RZ and RW denote driven roller groups which support the reverse side Rb of the subject document R. Designated by SP is a reading or scanning position where the optical unit OU scans the subject document R to read the information on the subject document R.

The guides G3, G4, G5, G7 and G10 are mounted on the box AB while the guides G6, G8 and G9 are mounted on a rear side cover BC which is pivotally connected by a shaft 100 to the box AB and can be opened and closed. Similarly, the feed rollers R1, R2 and R4 are rotatably mounted on the box AB, while the driven rollers RX, RY, RZ and RW are rotatably mounted on the rear side cover BC.

With this construction, the subject documents R are set on the subject document supply tray T1 attached to the paper supply portion RI and are successively fed at a constant speed by means of the feed rollers R1-R7 while each individual subject document is being guided by the guides G1-G10. The subject document R, as it advances along the horizontal U-shaped feed path, is scanned at the scanning position SP by means of the optical unit OU. The scanned subject document R is discharged from the paper discharge portion RO and then received onto the subject document discharge tray T2 attached to the paper discharge portion RO. The paper discharge portion RO is located at a higher level than the subject document supply tray T1.

It will be appreciated that once the user sets a subject document R at a lower portion (viz., the paper supply portion RI) of the front side FF of the box AB, he or she can take up the scanned subject document at an upper portion (viz., the paper discharge portion RO) of the front side FF of the box AB. Since the subject document R is supplied to, and discharged from, the front side FF of the scanner/printer apparatus A, it is very easy for the user to grasp the progress of the scanning operation. Accordingly, the user is readily able to manipulate the scanner/printer apparatus A.

In addition, since the feed path has a horizontal U shape, it is possible to minimize the traveling distance in the vertical direction. This is particularly advantageous because a longer vertical path may exert a negative influence on the reliable feeding of the subject document R.

Then, a description will be given of the retard rollers R3.

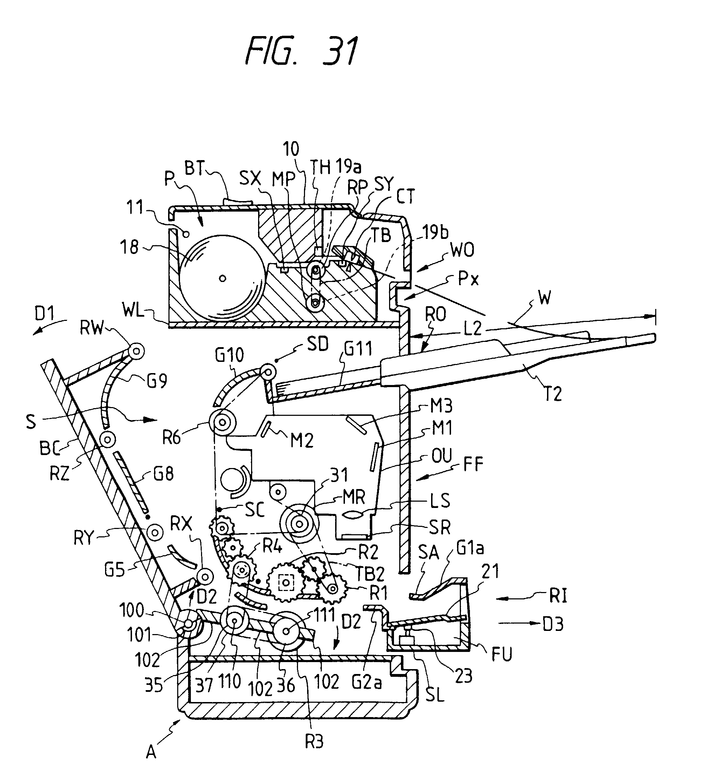

As shown in FIG. 31, the retard rollers R3 are fixed to a shaft 111 which is rotatably mounted on a retard roller attachment plate 102.

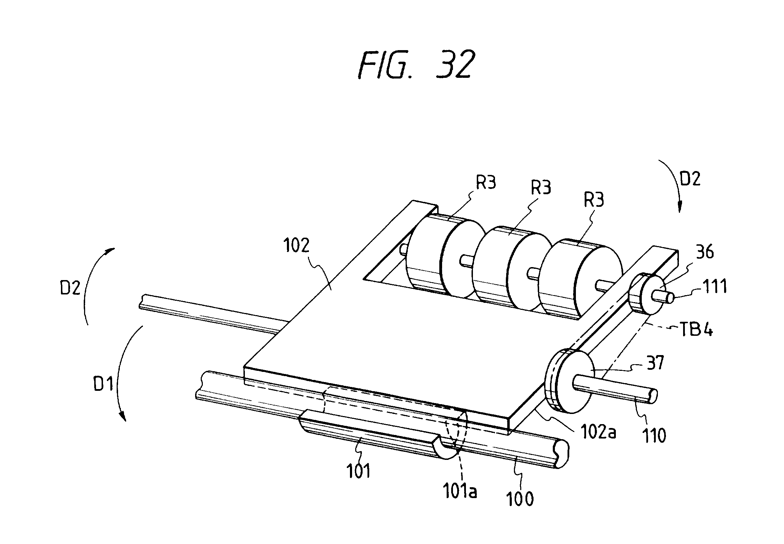

The retard roller attachment plate 102 is rotatably mounted on a rotating shaft 110, as shown in FIG. 32. A drive pulley 37 is fixedly mounted on the rotating shaft 110. The retard roller attachment plate 102 has an under surface 102a which is held in contact with a flat end 101a of a cam 101 provided on the rotating shaft 100 of the rear side cover BC. The retard roller attachment plate 102 is urged by a spring (not shown) to turn in a direction opposite to the direction of the arrow D2.

With this construction, when the rear side cover BC is opened, the shaft 100 and the cam 101 turn in the direction of the arrow D1. With this angular movement of the cam 101, the under surface 102a of the retard roller attachment plate 102 is forced upwardly by the flat end 101a of the cam 101 with the result that the retard roller attachment plate 102 is turned about the rotating shaft 110 in the direction of the arrow D2.

Accordingly, when the rear side cover BC is brought to the opened position, the driven rollers RX, RY, RZ, RW and the guides G2, G3 and G6 move along with the rear side cover BC. At the same time, the retard roller attachment plate 102 is turned in a direction to disengage the retard rollers R3 from the separation rollers R2. When the rear side cover BC is opened, the scanning unit S3 is exposed. Now, the scanning unit S3 can easily be maintained.

With this arrangement, when a subject document is jammed in the vicinity of the separation rollers R2, the jamming subject document can readily be removed without damage or stain.

In the illustrated embodiment, the retard rollers R3 are disengaged from the separation rollers R2. As an alternative, the separation rollers R2 or a double feed prevention member may be disengaged from the retard rollers R3.

Referring back to FIG. 3, there is shown structural details of the scanner section S including the optical unit OU. The optical unit OU has a generally inverted L shape and is disposed in a space surrounded by the horizontal U-shaped feed path. Thus, the internal space of the scanner section S is used efficiently. Designated by L is a light source such as a fluorescent lamp. Light a emitted from the light source L is reflected by the front side Ra of the subject document R as the subject document R passes through the scanning position SP. The reflected light is further reflected by a set of reflecting mirrors M1, M2 and M3, then passes through a lens LS, and finally forms an image on a scanning sensor SR composed of a charge-coupled device (CCD) sensor. Thus, information on the subject document R is read by the scanning sensor SR.

The previously mentioned guides, paper feed portions and paper discharge portion will be described below in greater detail.

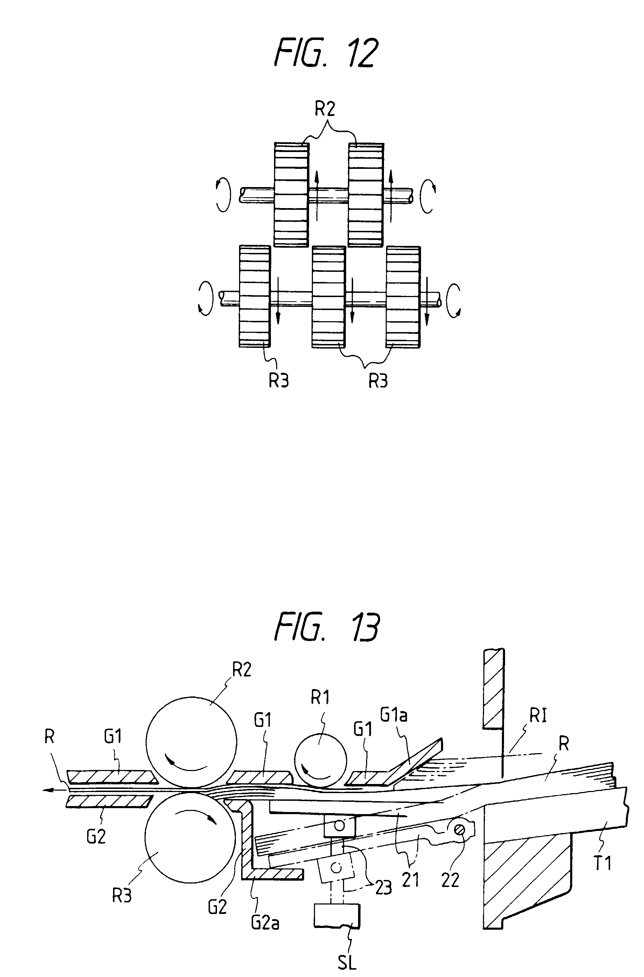

The guides G1 and G2 are disposed in confrontation and located adjacent to the paper supply portion RI. The guides G1, G2 have a substantially inverted J shape. The upper guide G1 controls movement of the front side Ra of the subject document R, while the lower guide G2 controls the movement of the reverse side Rb of the subject document R. As shown in FIG. 13, the upper guide G1 has a sloped end portion G1a which is bent upwardly and disposed adjacent to the paper supply portion RI. The lower guide G2 has a stepped end portion G2a which is bent into an L shape and disposed adjacent to the paper supply portion RI. Reference numeral 21 denotes a rectangular plate-like hopper 21 which is pivoted at one end (proximal end) to the box AB by means of a shaft 22 so that the opposite end (distal end) of the hopper 21 is movable between the upper guide G1 and the stepped end portion G2a of the lower guide G2. The under surface of the hopper 21 is connected to a plunger 23 of the solenoid SL. The plunger 23 is normally disposed in a retracted position as indicated by the phantom lines. While keeping this condition, a single subject document R or a stack of subject documents R are supplied to the subject document supply tray T1, whereupon the subject documents R slide down along the subject document supply tray T1 and then supported on the hopper 21, with a leading end of the stacked subject documents R held in contact with the stepped end portion G2a of the lower guide G2.

When the user operates the keyboard D (FIG. 1) to input a scanning start command or instruction to the CPU 1 (FIG. 1), the CPU 1 activates the solenoid SL. Upon activation of the solenoid, the plunger 23 projects to pivot the hopper 21 upwardly with the result the topmost subject document R is forced into friction contact with the upper guide G1 and the feed rollers R1. The topmost subject document R can now be fed toward the scanning position SP by means of the feed rollers R1.

The sloped end portion G1a is provided in order to control or limit the amount of subject documents R. More specifically, when the subject documents R are supplied excessively, an excess amount of subject documents R abut against the sloped end portion G1a. Thus, the sloped end portion G1a blocks excessive subject documents R from advancing toward the feed rollers R1.

All of the guides G1 and G2, the hopper 21, the solenoid SL including the plunger 23 and the subject document presence sensor SA, which are disposed adjacent to the paper supply portion RI of the scanner section S, are mounted on a paper supply unit FU. As shown in FIG. 33, the paper supply unit FU includes a pair of slide members 120 and 121 attached to the opposite side walls of the paper supply unit FU. The slide members 120, 121 are slidably fitted with a pair of slide guides 122 and 123, respectively, which are attached to opposed inside surfaces of the box AB. With this construction, when the subject document supply tray T1 and a paper supply portion cover FC are detached from the box AB, the paper supply unit FU can be detached from the box X by pulling the same in the direction of the arrow D3 shown in FIG. 31.

By virtue of the detachable paper supply unit FU, a subject document R jamming in the vicinity of the feed rollers R1 can be removed easily. In addition, maintenance works including cleaning of the retard rollers R3 can be accomplished with utmost ease.

When a large number of subject documents R are set on the subject document supply tray T1, it may occur that two or more subject documents R are concurrently supplied by the feed rollers R1. However, according to the illustrated embodiment, the separation rollers R2 rotate in the same direction (forward feed direction) as the feed rollers R1, whereas the retard rollers R3 confronting the separation rollers R2 are rotated in the reverse feed direction. Furthermore, peripheral surfaces of the separation rollers R2 have a friction coefficient which is larger than that of the peripheral surfaces of the retard rollers R3. With this arrangement, the subject documents R are fed one by one to the scanning position SP. The separation rollers R2 and the retard rollers R3 are arranged in staggered relation, as shown in FIG. 12.

As shown in FIG. 3, two confronting guides G9 and G10 cooperate to guide the subject document R from the scanning position SP toward the paper discharge portion RO. A support guide G11 is disposed between a discharge end of the guides G9, G10 and the subject document discharge tray T2 detachably connected to the paper discharge portion RO.

The support guide G11 has an L-shaped cross section and has an upper surface extending in flush with an upper surface of the subject document discharge tray T2. The subject documents RE which have been read or scanned at the scanning position SP are stacked on the support guide G11, with their trailing edges held in contact with an upstanding portion of the L-shaped support guide G11. The discharge end of the guides G9 and G10 is located at a higher level than the upper surface of the support guide G11.

With this construction, the scanned subject document RE while being guided by the guides G9 and G10 is discharged from the discharge end of the guides G9, G10 by means of the rollers R7, RW. The scanned subject document RE thus discharged flies over a short distance and then falls onto the support guide G11 and the subject document discharge tray T2. The scanned subject document RE is supported on the support guide G11 and the subject document discharge tray T2 with its trailing edge held in contact with the upstanding portion of the support guide G11. A longitudinal portion of the scanned subject documents RE which extends from the trailing edge of the scanned subject document RE is supported on the support guide G11 and hence is received within the box AB, The longitudinal portion is several tens percent of the entire length of the scanned subject document RE. Accordingly, even when a subject document having a maximum size is to be read or scanned, a substantial portion of the scanned subject document RE is received within the box AB. With this arrangement, the length L2 of a portion of the subject document discharge tray T2 which projects from the front side FF of the box AB can be reduced to such an extent that the projecting length L2 is smaller than the length L3 of a portion of the subject document supply tray T1 projecting from the front side FF of the box AB.

The user when looking down the scanner/printer apparatus from the front side FF can readily observe the condition of the scanned subject documents RE which are discharged onto the subject document discharge tray T2 and the condition of the subject documents R which is supported on the subject document supply tray T1. Thus, the current status of the scanning operation can readily be grasped by the user.

Since the projecting length L2 of the subject document discharge tray T2 is smaller than the project length L3 of the subject document supply tray T1, the subject document supply tray T1 can be handled smoothly without interference with the subject document discharge tray T2.

Then, the feed roller groups R1-R7 will be described in greater detail.

All of the feed rollers R1-R7 are driven by a common drive source composed of a motor MR. The rollers R6 and the rollers R7 are spaced in the vertical direction, with the scanning position SP disposed between the rollers R6 and the rollers R7. The rollers R6 and R7, respectively, cooperate with the driven rollers RY and RZ and feed the subject document R in a vertically upward direction while tensioning or stretching the subject document R.

The subject document R thus tensioned is unlikely to become slackened even when it moves upwardly through the scanning position SP against the gravity. Accordingly, even when the feed speed of the subject document R (viz., the scanning speed) is increased, a highly accurate scanning operation is possible. As a result of reasonable increase in the document feed speed, a corresponding reduction in the scanning time can be obtained.

The rollers 7 serve as discharge rollers for feeding the scanned subject document RE toward the support guide G11. Each of the roller groups R5, R6 and R7 has a driven pulley attached to a common shaft of each roller group R5, R6, R7. The respective driven pulleys associated with the roller groups R5-R7 and a drive pulley 31 attached to a drive shaft of the motor MP are operatively connected by means *of* a first endless belt TB1. The motor MP is continuously rotated in the forward direction as long as the reading or scanning operation continues. Accordingly, the rollers R5-R7 are continuously rotated in the forward feed direction as long as rotation of the motor MP continues.

A description given below is related to the construction of the roller groups R1, R2, R3 and R4. As previously mentioned, the rollers R1 are feed rollers, the rollers R2 are separation rollers, and the rollers R3 are retard rollers. The rollers R4 are auxiliary feed rollers which are disposed between the separation rollers R2 and the feed rollers R5 for temporarily arresting forward movement of the subject document R at a position immediately upstream of the scanning position SP until after the preceding subject document R is fully scanned at the scanning position SP. As soon as the scanning operation on the preceding subject document R is completed, the auxiliary feed rollers R4 are operated to advance the subsequent subject document R toward the scanning position SP.

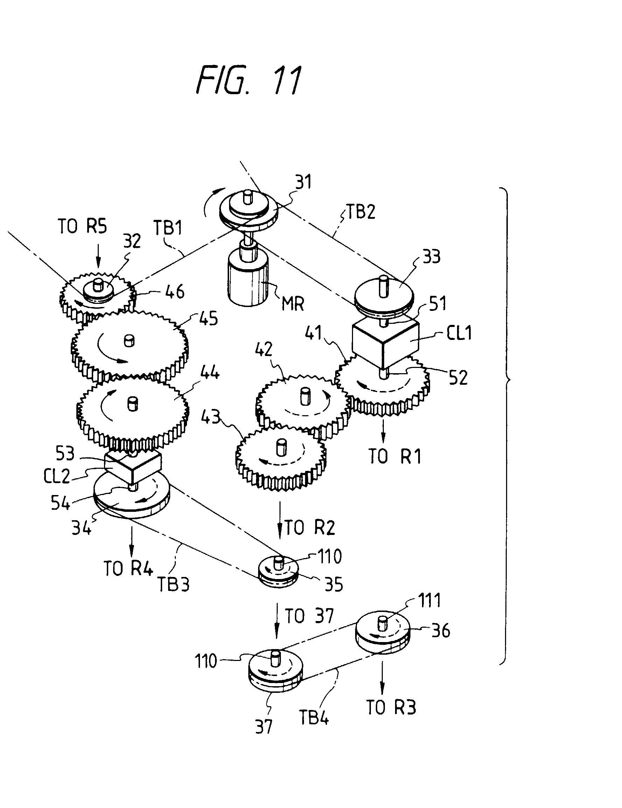

FIG. 11 diagrammatically shows a power transmission mechanism associated with the rollers R1-R4.

The drive pulley 31 attached to the drive shaft of the motor MR is operatively connected by the first endless belt TB1 to a driven pulley 32 which is attached to a common shaft of the feed rollers R5. In FIG. 11 designated by CLI and CL2 are first and second electromagnetic clutches. The first electromagnetic clutch CL1 has a driven shaft 52 which is directly connected to a common shaft of the feed rollers R1. A drive shaft 51 of the first electromagnetic clutch CL1 is attached to a driven pulley 33. The driven pulley 33 is operatively connected to the drive pulley 31 by means of a second endless belt TB2. The driven shaft 52 is provided with a gear 41 which is held in meshed with a gear 43 via an intermediate gear 42. The gear 43 is fixedly mounted on a common shaft of the separation rollers R2.

The second electromagnetic clutch CL2 has a driven shaft 54 which is attached to a pulley 34. A third endless belt TB3 is trained around the pulley 34 and an intermediate pulley 35 which is attached to the rotating shaft 110. Similarly, a fourth endless belt TB4 is trained around an intermediate pulley 37 which is attached to the rotating shaft 111, and a pulley 36 attached to a common shaft 111 of the retard rollers R3. A drive shaft 53 of the second electromagnetic clutch CL2 is provided with a gear 44 which is held in mesh with a gear 46 via an intermediate gear 45. The gear 46 is fixedly mounted on a common shaft cf the feed rollers R5.

With this construction, when the motor MR is operating, the pulleys 31-33 and the gears 44-46 are continuously rotated in the direction indicated by the solid-lined arrows. When the first electromagnetic clutch CL1 is engaged, the gears 41-44 start rotating in the direction of the broken-lined arrows. Thus, the feed rollers R1 and the separation rollers R2 are rotated in the forward feed direction. On the other hand, when the second electromagnetic clutch CL2 is engaged, the pulleys 34-37 are rotated in the direction indicated by the broken-lined arrows. As a result, the auxiliary feed rollers R4 are rotated in the forward feed direction, and the retard rollers R3 are rotated in the reverse feed direction.

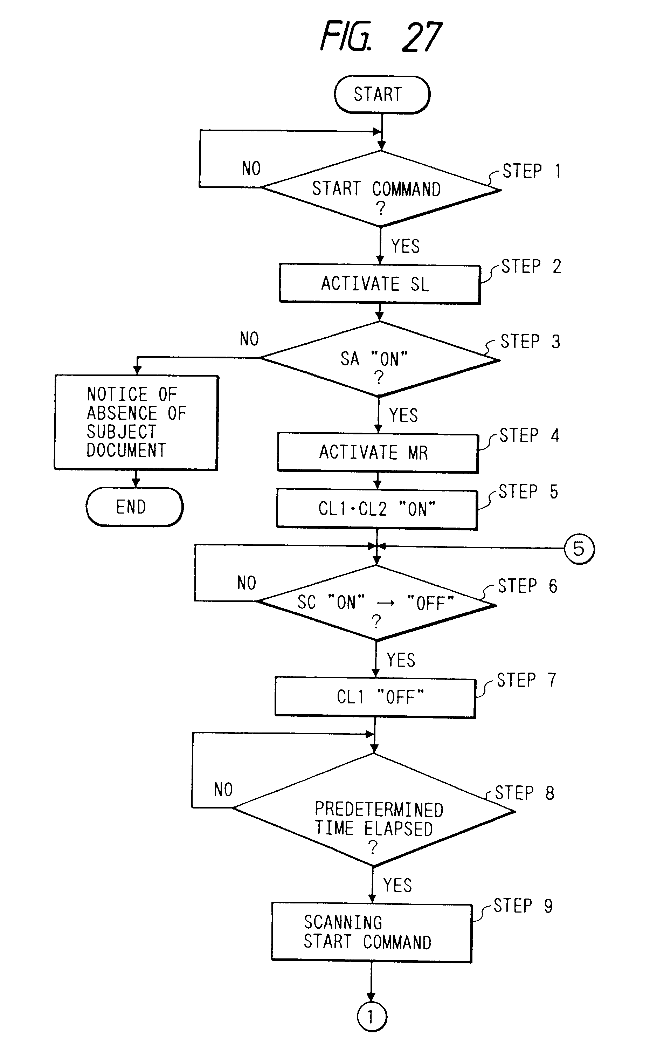

The operation of the scanner section S will be described below with reference to the flowcharts shown in FIGS. 27 through 30.

In the initial state or when the scanner section S is not operated, the output of the subject document presence sensor SA is in the "off" state, while the respective outputs of the subject document trailing end sensor SB, subject document leading end sensor SC and subject document discharge sensor SD are in the "on" state. The first and second electromagnetic clutches CL1, CL2 are turned off or disengaged.

At a step 1, the CPU 1 (FIG. 2) receives a start command or instruction which is suppled from the main frame B (FIG. 1) of the information processing system by virtue of the keyboard input. Then, at a step 2, the CPU 1 activates the solenoid SL. Upon activation of the solenoid SL, the hopper 21 is forced upwardly by the plunger 23 in the manner described above. In this instance, if at least one subject document R is set on the subject document supply tray T1, the subject document R is forced against the upper guide GI and the feed rollers R1. Due to the presence of the subject document R, the subject document presence sensor SA is turned on.

At the next step 3, the CPU 1 determines as to whether or not the output of the subject document presence sensor SA is turned on. If yes, the CPU 1 executes the control operation at a step 4. Conversely, if the output of the subject document presence sensor SA is in the "off" state, the absence of the subject document R at the paper supply portion RI is notified to the main frame B of the information processing system. Upon receipt of the document absence notice, the main frame B of the information processing system indicates the absence of the subject document R on the display device C (FIG. 1). In the case where the subject document R is set, the CPU 1 drives the motor MR at a step 4 and subsequently engages the first and second electromagnetic clutches CL1 and CL2 at a step 5. Thus, the feed rollers R1, the separation rollers R2, the retard rollers R3 and the auxiliary feed rollers R4 are rotated in the directions of the arrows shown in FIG. 14 with the result that the subject document R is advanced along the feed path. As the subject document R advances, the respective outputs of the subject document training end sensor SB, the subject document leading end sensor SC and the subject document discharge sensor SD are shifted from the "on" state to the "off" state when the leading end of the subject document R passes over the respective sensors, and also change from the "off " state to the "on" state when the trailing end of the subject document R passes over the respective sensors.

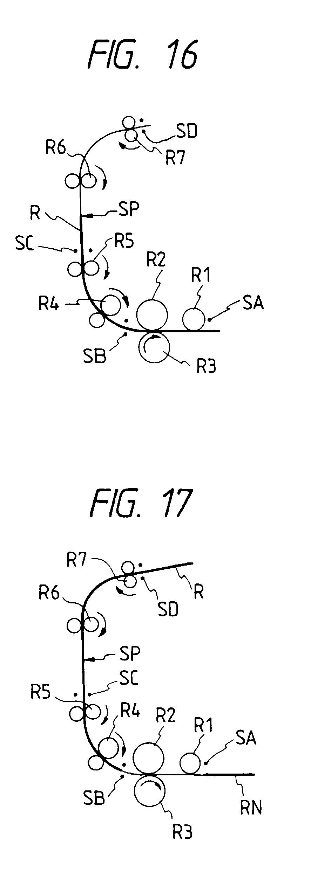

Following the start of delivery of the subject document R, the CPU 1 waits for the occurrence of a condition in which the output of the subject document trailing end sensor SC is changed from the "on" state to the "off" state (step 6). When the sensor SC is turned off, the first electromagnetic clutch CL1 is turned off or disengaged. In this instance, however, the second electromagnetic clutch CL2 is held in the "on" or engaged state. Accordingly, as shown in FIG. 15, the feed rollers R1 and the separation rollers R2 are stopped, whereas the retard rollers R3 and the auxiliary feed rollers R4 are continuously rotated. The subject document R is further advanced by the auxiliary feed rollers R4. During that time, the retard rollers R3 continuously prevents the next subject document RN (see FIG. 17) from moving along with the preceding subject document R.

The step 7 is followed by a step 8 at which the CPU 1 judges whether or not a predetermined period of time has elapsed. If the judgment indicates a lapse of the predetermined time period, then the control goes on to a step 9 at which the CPU 1 activates the scanning unit S3 and the image processing unit S4 to commence the scanning operation. Image data scanned by the scanning unit S is subjected to a data processing operation, such as digitization or data compression, which is executed by the image processing unit S4. The processed data in temporarily stored in a memory (not shown) of the image processing unit S4 and subsequently transferred to the main frame B of the image processing system. When the data transfer operation is completed, the image processing unit S4 notifies the CPU 1 of the end of the data transfer operation.

The time period which is set at the step 8 is determined such that this time period is spent while the subject document R travels over a distance defined between the position of the subject document leading end sensor SC and the scanning position SP. This means that at a time when the scanning operation begins at the step 9, the leading end of the subject document R is located at the scanning position SP, as shown in FIG. 16. (The above-mentioned time period can easily be determined based on the feeding speed of the subject document R and the distance between the position of the subject document leading end sensor SC and the scanning position SP.)

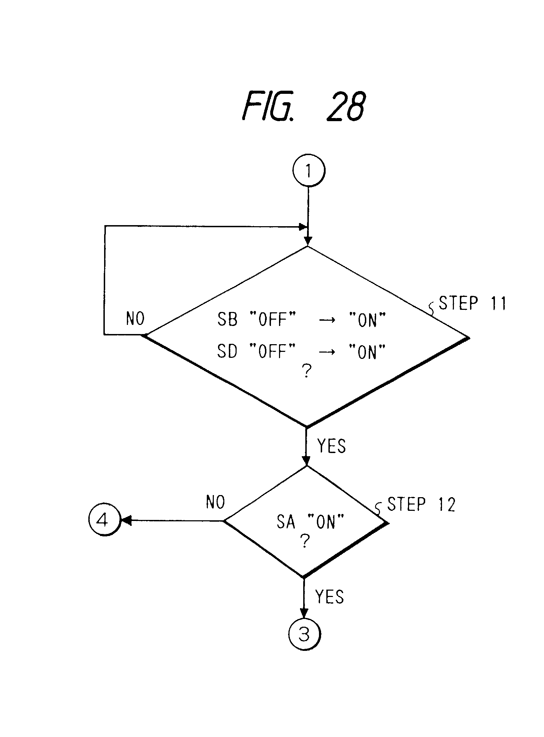

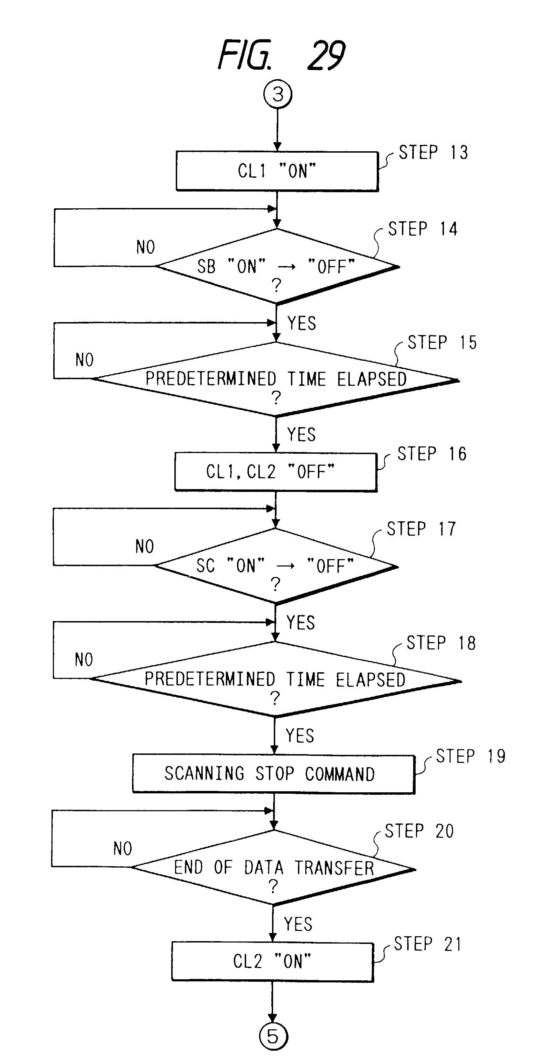

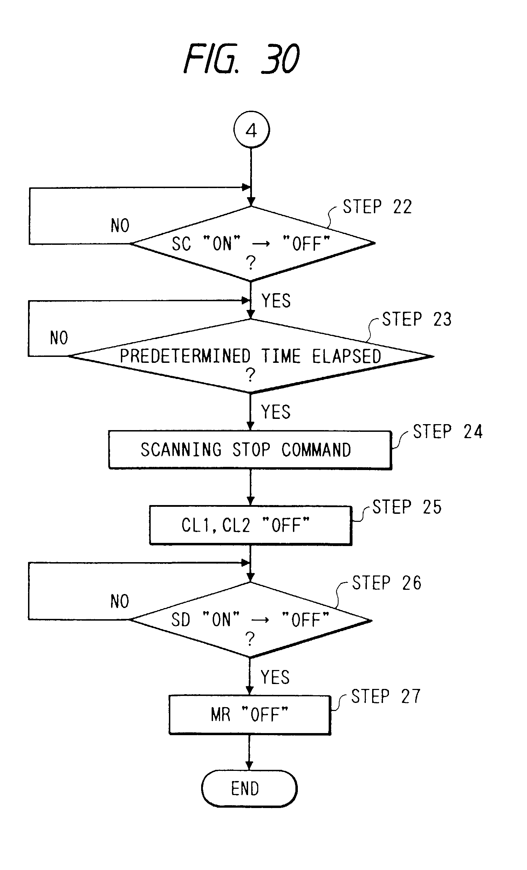

As the scanning operation is achieved by the scanning unit S3, the CPU 1 continuously observes the output of the subject document trailing end sensor SB (step 11 shown in FIG. 28). When the output of the subject document trailing end sensor SB is shifted from the "off" state to the "on" state, as shown in FIG. 17, a step 12 determines as to whether the output of the subject document presence sensor SA is turned on or not. If yes, the control goes on to a step 13 shown in FIG. 29. Conversely, if the output of the subject document presence sensor SA is in the "off" state, the control goes on to a step 22 shown in FIG. 30.

At the step 13, the CPU 1 sets the first electromagnetic clutch CL1 in the on or engaged state whereupon the next subject document RN is advanced toward the scanning position SP. Thus, the first electromagnetic clutch CL1 is turned on or engaged only when the output of the subject document trailing end sensor SB is changed from the "off" to the "on" state (namely, only when the departure of the trailing end of the subject document R from the position of the subject document trailing end sensor SB is detected). With this controlled operation, it is possible to eliminate the possibility of occurrence of a double-feed problem that the leading end of the next or subsequent subject document RN overlaps the trailing end of the preceding subject document R. The step 13 is followed by a step 14 at which the CPU 1 judges as to whether the output of the subject document trailing end sensor SB is changed from the "on" state to the "off" state. When the subject document trailing end sensor SB is turned off, the control proceeds to a step 15. At the step 15, the CPU 1 judges whether or not a predetermined period or time has elapsed. This time period is determined such that during this time period, the leading end of the next subject document RN is advanced over a distance which is defined between the position of the subject document trailing end sensor SB and the nip point between the auxiliary feed rollers R4 and the driven rollers RX.

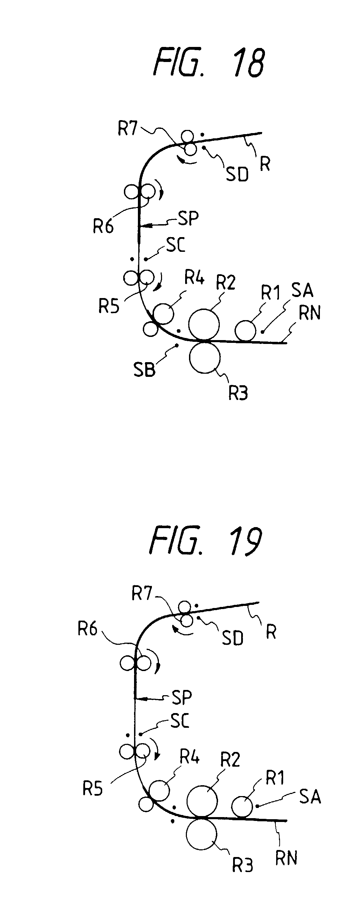

When the predetermined time period has passed away, the CPU 1 sets the first and second electromagnetic clutches CL1 and CL2 in the "off" or disengaged state (step 16). Thus, the next subject document RN is temporarily stopped, with its leading end portion nipped between the auxiliary feed rollers R4 and the driven rollers RX, as shown in FIG. 18.

During that time, the preceding subject document R is being subjected to the image scanning operation by the scanning unit S3. At a step 17, the CPU 1 determines as to whether or not the output of the subject document leading end sensor SC is changed from the "off" state to the "on" state. If yes, the control goes on to a step 18 at which the CPU 1 counts down a predetermined period of time. When the predetermined time period has passed away, the control goes on to a step 19 at which the CPU 1 supplies a scanning end command or instruction to the scanning unit S3. Thus, the reading or scanning operation is terminated.

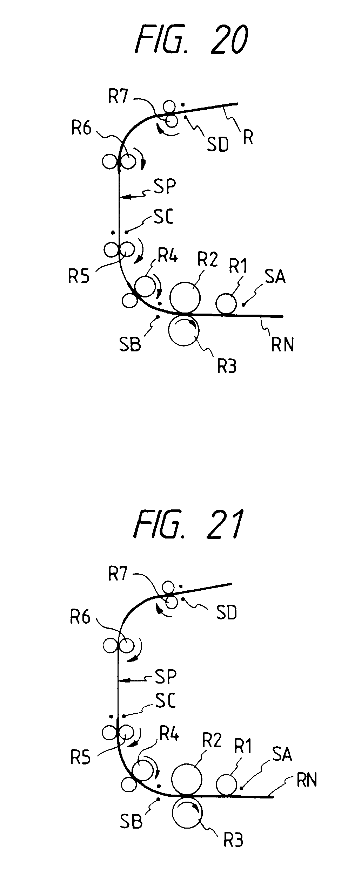

Subsequently, at a step 20, the CPU 1 awaits the arrival of a notice of completion of data transfer which is supplied from the scanning unit S3. When the notice is received, the CPU 1 sets the second electromagnetic clutch CL2 to the "on" or engaged state at a step 21, and after that the control routine returns to the step 6. By the control operation achieved at the step 21, the auxiliary feed rollers R4 are rotated again to restart or resume the forward conveyance of the next subject document RN, as shown in FIG. 20.

The time period which is counted down by the CPU 1 at the step 18 is determined such that during this time period, the trailing end of the subject document R travels over a distance which extends from the position of the subject document leading end sensor SC to the scanning position SP. Accordingly, when the scanning operation is completed at the step 19, the trailing end of the subject document R arrives at the position of the scanning position SP, as shown in FIG. 19.

The control operation achieved at the step 20 may be omitted if the image processing unit S4 is equipped with a sufficiently large memory which is capable of storing scanned image data equivalent to the amount of information contained in more than two subject documents. However, owing to the step 20, the scanning operation for the next subject document SN does not take place unless a scanned data transferring operation is completed. Accordingly, even if a memory of a small capacity is used, scanned image data which is equivalent in amount to more than two subject documents can be stored without involving any difficulty such as a damage on the scanned data due to a memory overflowing.

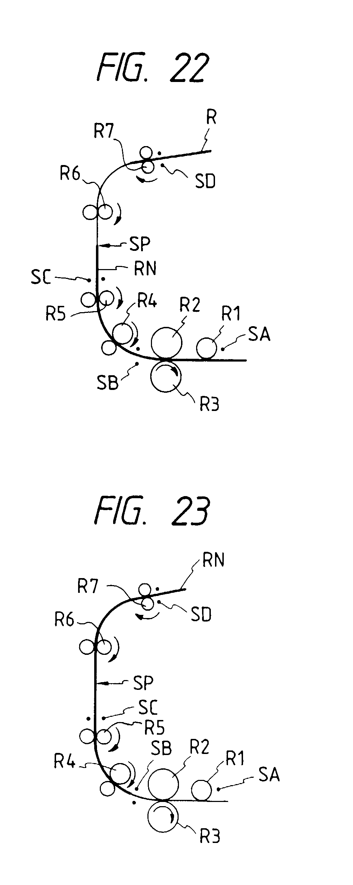

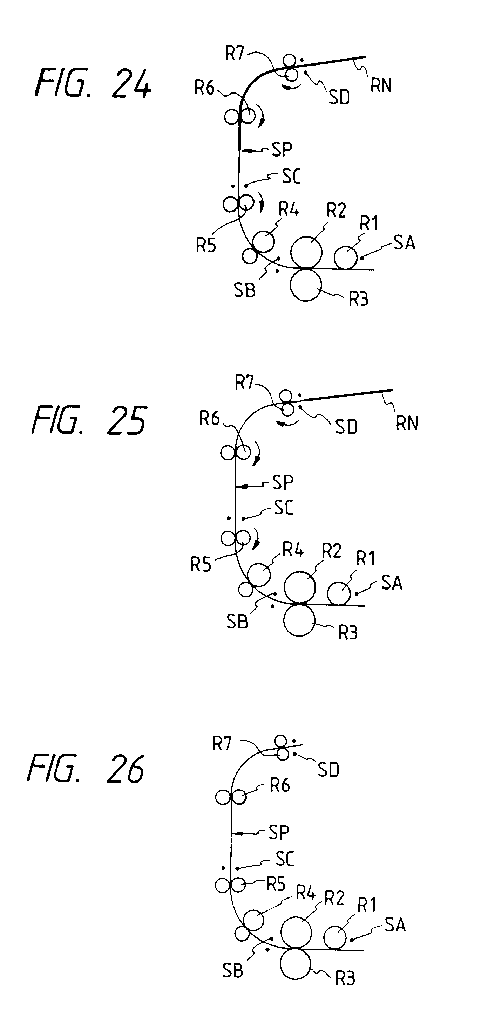

The next subject document RE is processed in the same manner as the preceding subject document R (see FIGS. 21 and 22). If the next subject document RE is not followed by a succeeding subject document, the decision at the step 12 represents that the output of the subject document presence sensor SA is set in the "off" state (see FIG. 23). Then, the control goes on to the step 22 shown in FIG. 30. At the step 22, the CPU 1 continuously observes the output of the subject document leading end sensor SC. When the output is changed from the "off" state to the "on" state, the control goes on to a step 23 at which the CPU 1 counts down a predetermined period of time. When the predetermined time period has elapsed, the control advances to a step 24 at which the first and second clutches CL1 and CL2 are turned off or disengaged (see FIG, 24). Thereafter, at a step 26, the CPU 1 detects a timing at which the output of the subject document discharge sensor SD is shifted from the "off" state to the "on" state (see FIG. 25). When this timing is detected, this means that the subject document R is discharged. Accordingly, the control goes on to a step 27 at which the motor MR is stopped (see FIG. 26). The control operations achieved at steps 22-24 are the same as those of the steps 17-19 and, hence, a detailed description will be omitted.

As is apparent from the foregoing description, when more than two subject documents are to be read or scanned successively, the next subject document is temporarily stopped at a position adjacent to a scanning unit while the preceding subject document is being subjected to a scanning operation. This arrangement makes it possible to cut down the waiting time between the end of scanning of the preceding subject document and the start of scanning of the succeeding subject document. A high-speed scanning of the subject documents can, therefore, be accomplished.

An image scanning apparatus according to the invention includes a body case composed of a substantially rectangular hollow box. The hollow box includes a paper discharge portion and a paper supply portion which are formed in a front side of the hollow box in vertically spaced relation to one another. A horizontal U-shaped feed path is formed within the hollow box such that a subject document supplied from the paper supply portion is guided to the paper discharge portion via a scanning unit disposed in the hollow box. The image scanning apparatus thus constructed only requires a small space for installation thereof. In addition, all the sides of the hollow box except the front side may be located close to a dead space. The image scanning apparatus can therefore be installed without involving substantial limitations about the installation site. In order to save the space, the scanning apparatus may be used in combination with a printer apparatus in which instance the printer apparatus is disposed above the image scanning apparatus.

In the image scanning apparatus, those components which are disposed adjacent the paper supply portion may be constructed as a single paper feed unit which is removable from the hollow box. This removable paper feed facilitate the maintenance of the internal structure of the box.

Obviously, various minor changes and modifications of the present invention are possible in the light of the above teaching. It is therefore to be understood that within the scope of the appended claims the invention may be practiced otherwise than as specifically described.

## Claims

1. An image scanning apparatus comprising
(a) a paper supply portion (T1) for supporting thereon a plurality of subject documents (R, RN),
(b) a paper discharge portion (T2) for discharging the subject documents (R, RN),
(c) scanning means (S3) for scanning the subject documents (R, RN) so that the subject documents (R, RN) are conveyable between said paper discharge portion (T2) and said scanning means (S3),
(d) first feed means (R1, R2) for feeding the subject documents (R, RN) in sequence from said paper supply portion (T1) to said scanning means (S3),
(e) second feed means (R6, R7) for feeding the subject documents (R, RN) in sequence from said scanning means (S3) to said paper discharge portion (T2),
(f) a document detection sensor (SB) positioned relative to said scanning means (S3) for detecting the presence of each subject document (R, RN) being fed by said first feed means (R1, R2) to provide a signal indicative thereof,
(g) storage means for storing information about said each subject document (R, RN) being scanned by said scanning means (S3), and
(h) control means (1) for controlling said first and second feed means (R1, R2, R6, R7) to feed a preceding subject document (R) through the second feed means (R6, R7) and a following subject document (RN) through the first feed means (R1, R2),
characterized in that
(i) said control means (1) are responsive to the signal indicative of the presence of the following subject document (RN) outputted from said document detection sensor (SB) to control a means (R4) for temporarily arresting advancing movement of the following subject document (RN) at a position immediately upstream of the scanning position until a storage operation of said storage means to store data of the preceding document (R) read out by said scanning means (S3) is completed.

2. An image scanning apparatus according to claim 1, wherein said storage means is operated to store said scanned information through a data compression process.

## Patentansprüche

1. Abbildungsabtastvorrichtung, umfassend:
(a) einen Papierlieferabschnitt (T1), um darauf eine Vielzahl von Dokumenten (R, RN) zu tragen,
(b) einen Papieraustragsabschnitt (T2) zum Austragen der Dokumente (R, RN),
(c) eine Abtasteinrichtung (S3) zum Abtasten der Dokumente (R, RN), so daß die Dokumente (R, RN) zwischen dem Papieraustragsabschnitt (T2) und der Abtasteinrichtung (S3) befördert werden können,
(d) eine erste Zufuhreinrichtung (R1, R2) zum Zuführen der Dokumente (R, RN) in der Reihenfolge von dem Papierlieferabschnitt (T1) zu der Abtasteinrichtung (S3),
(e) eine zweite Zufuhreinrichtung (R6, R7) zum Zuführen der Dokumente (R, RN) in der Reihenfolge von der Abtasteinrichtung (S3) zu dem Papieraustragsabschnit (T2),
(f) einen Dokumentdetektionssensor (SB), der relativ zu der Abtasteinrichtung (S3) zur Detektion der Anwesenheit jedes Dokumentes (R, RN) positioniert ist, das durch die erste Zufuhreinrichtung (R1, R2) zugeführt wird, um ein Signal zu bilden, das diese anzeigt.
(g) eine Speichereinrichtung zum Speichern von Information über jedes Dokument (R, RN), das durch die Abtasteinrichtung (S3) abgetastet wird, und
(h) eine Steuereinrichtung (1) zum Steuern der ersten und zweiten Zufuhreinrichtungen (R1, R2, R6, R7), um ein vorausgehendes Dokument (R) durch die zweite Zufuhreinrichtung (R6, R7) und ein folgendes Dokument (RN) durch die erste Zufuhreinrichtung (R1, R2) zu führen.
**dadurch gekennzeichnet**,
(i) daß die Steuereinrichtungen (1) auf das Signal ansprechen können, das die Anwesenheit des folgenden Dokumentes (RN) anzeigt und das von dem Dokumentdetektionssensor (SB) ausgegeben wird, um eine Einrichtung (R4) zum vorübergehenden Anhalten der Vorrückbewegung des folgenden Dokumentes (RN) an einer Position unmittelbar oberstromig der Abtastposition zu steuern, bis ein Speichervorgang der Speichereinrichtung zum Speichern von Daten des vorausgehenden Dokumentes (R), die durch die Abtasteinrichtung (S3) ausgelesen werden, beendet ist.

2. Abbildungsabtastvorrichtung nach Anspruch 1, wobei die Speichereinrichtung betrieben wird, um die abgetastete Information durch einen Datenkompressionsprozeß zu speichern.

## Revendications

1. Appareil scanner pour images, comprenant :
(a) une partie d'alimentation de papier (T1) pour supporter sur celle-ci une pluralité de documents sujets (R,RN),
(b) une partie de décharge de papier (T2) pour décharger les documents sujets (R, RN),
(c) des moyens scanners (S3) pour scanner les documents sujets (R,RN) de telle sorte que les documents sujets (R,RN) soient susceptibles d'être transportés entre ladite partie de décharge de papier (T2) et lesdits moyens scanners (S3),
(d) des premiers moyens d'amenée (R1, R2) pour amener les documents sujets (R, RN) en séquence depuis ladite partie
d'alimentation de papier (T1) jusqu'auxdits moyens scanners (S3), (e) des seconds moyens d'amenée (R6, R7) pour amener les documents sujets (R, RN) en séquence depuis lesdits moyens scanners (S3) jusqu'à ladite partie de décharge de papier (T2),
(f) un capteur de détection de papier (S3) positionné par rapport auxdits moyens scanners (S3 pour détecter la présence de chaque document sujet (R, RN) qui est amené par lesdits premiers moyens d'amenée (R1,R2) pour donner un signal indicatif de cette présence,
(g) des moyens de stockage pour stocker des informations concernant chaque document sujet (R, RN) qui est scanné par lesdits moyens scanners (S3), et
(h) des moyens de commande (1) pour commander lesdits premiers et seconds moyens d'amenée (R1,R2,R6,R7) pour amener un document sujet précédent (R) par les seconds moyens d'amenée (R6, R7) et un document sujet suivant (RN) par les premiers moyens d'amenée (R1,R2),
caractérisé en ce que :
lesdits moyens de commande (1) réagissent au signal indiquant la présence du document sujet suivant (RN) et délivré par ledit capteur de détection de document (SB) pour commander des moyens (R4) pour arrêter temporairement le mouvement d'avance du document sujet suivant (RN) à une position immédiatement en amont de la position de scannage jusqu'à ce qu'une une opération de stockage desdits moyens de stockage pour stocker les données du document précédent (R) lues par lesdits moyens scanners (S3) soit terminée.

2. Appareil scanner pour images selon la revendication 1, dans lequel lesdits moyens de stockage sont actionnés pour stocker lesdites informations de scannage par un processus de compression de données.
